# EUROPÄISCHE PATENTSCHRIFT

(11) **EP 3 477 011 B1**
(45) Veröffentlichungstag und Bekanntmachung des Hinweises auf die Patenterteilung: **01.11.2023**
(21) Anmeldenummer: 18170380.2
(22) Anmeldetag: 02.05.2018
(51) Int. Cl.: E03F 5/14, B01D 29/44, B01D 29/64, E02B 8/02, C02F 11/122, C02F 11/131

(54) **ANORDNUNG UND VERFAHREN ZUM ABSCHEIDEN UND ABTRANSPORT VON SIEBGUT AUS ABWASSER**
ASSEMBLY AND METHOD FOR SEPARATING AND REMOVING MATERIAL TO BE SCREENED FROM WASTE WATER
DISPOSITIF ET PROCÉDÉ DE SÉPARATION ET DE TRANSPORT DE PRODUIT DE FILTRAGE À PARTIR D'EAUX USÉES

(30) Priorität: 25.10.2017 DE 102017124991
(43) Veröffentlichungstag der Anmeldung: 01.05.2019
(73) Patentinhaber: Huber SE, 92334 Berching (DE)
(72) Erfinder: Starcevic, Dr. Nikica, 92334 Berching (DE); Kerschensteiner, Jürgen, 92367 Pilsach/Laaber (DE); Neger, Anton, 92339 Beilngries (DE)
(74) Vertreter: Canzler & Bergmeier Patentanwälte Partnerschaft mbB

(56) Entgegenhaltungen:
- EP-A1- 0 554 580
- EP-A2- 0 685 431
- WO-A1-98/15336
- DE-A1-102016 102 871
- DE-U1- 9 314 386

## Beschreibung

Die vorliegende Erfindung betrifft eine Anordnung zum Abscheiden und Abtransport von Siebgut aus einem die Anordnung passierenden Abwasser, wobei die Anordnung eine Siebvorrichtung mit einer Siebfläche umfasst, die von dem Abwasser im Betrieb der Siebvorrichtung durchströmt wird und mit deren Hilfe im Abwasser mitgeführtes Siebgut zumindest teilweise zurückgehalten wird.

Darüber hinaus wird ein System zur Behandlung von Abwasser vorgeschlagen, die eine oben genannte Anordnung sowie wenigstens eine der Anordnung nachgeschaltete Vorrichtung zur Behandlung des von der Anordnung zurückgehaltenen Siebguts umfasst.

Schließlich betrifft die Erfindung ein Verfahren zum Betreiben einer Anordnung zum Abscheiden und Abtransport von Siebgut aus einem die Anordnung passierenden Abwasser, wobei die Anordnung eine Siebvorrichtung mit einer Siebfläche umfasst, die von dem Abwasser im Betrieb der Siebvorrichtung durchströmt wird und mit deren Hilfe im Abwasser mitgeführtes Siebgut zumindest teilweise zurückgehalten wird.

Entsprechende Siebvorrichtungen sind im Stand der Technik hinlänglich bekannt und dienen beispielsweise der Entfernung von grobem Siebgut (Holz, Steine, etc.) aus einem in einem Abwasserkanal fließenden Abwasser. Die Siebvorrichtung wird hierzu in der Regel derart in den Abwasserkanal integriert, dass sich die Siebfläche, ausgehend von der Kanalsohle, senkrecht oder leicht geneigt nach oben erstreckt. Um einen Austrag des von dem die Siebfläche bildenden Siebrost zurückgehaltenen Siebguts zu ermöglichen, erstreckt sich die Siebfläche meist über den maximal zu erwartenden Wasserspiegel.

Durch einen Umlaufbetrieb von der Siebfläche zugeordneten und mit Hilfe eines Antriebs angetriebenen Räumelementen wird schließlich das Siebgut entlang der Vorderseite der Siebfläche nach oben in Richtung eines Auslasses gefördert und dort, beispielsweise mit Hilfe eines Abstreifers, von dem oder den Räumelementen entfernt.

Eine gattungsgemäße Siebvorrichtung ist beispielsweise im Zusammenhang mit Figur 1 der DE 10 2012 103 058 A1 beschrieben. Weitere Siebvorrichtungen offenbaren die EP 0 554 580 A1, die EP 0 685 431 A2, die DE 93 14 386 U1 und die WO 98/15336 A1.

Aufgabe der vorliegenden Erfindung ist es, eine gattungsgemäße Anordnung mit einer Siebvorrichtung, ein die Anordnung umfassendes System zur Behandlung von Abwasser sowie ein Verfahren zum Betreiben einer die Siebvorrichtung aufweisenden Anordnung zu verbessern.

Die Aufgabe wird gelöst durch eine Anordnung, ein System sowie ein Verfahren mit den Merkmalen der unabhängigen Patentansprüche.

Erfindungsgemäß wird zunächst eine Anordnung zum Abscheiden und Abtransport von Siebgut aus einem die Anordnung passierenden Abwasser vorgeschlagen. Die Anordnung, die vorzugsweise in einen kommunalen Abwasserkanal integriert ist oder hierfür vorgesehen ist, umfasst eine Siebvorrichtung mit einer Siebfläche, die insbesondere mehrere nebeneinander angeordnete Siebstäbe aufweist. In jedem Fall wird die Siebfläche von dem Abwasser im Betrieb der Siebvorrichtung durchströmt, wobei Siebgut, das vom Abwasser mitgeführt wird (z. B. Steine, Holz- oder Kunststoffgegenstände), zurückgehalten wird, wenn es bestimmte Mindestabmessungen aufweist, wobei die Mindestabmessungen von der Maschenweite der Siebfläche bzw. dem gegenseitigen Abstand der Siebstäbe abhängt.

Um das zurückgehaltene Siebgut von der Siebfläche zu entfernen und in Richtung des genannten Auslasses zu transportieren, kann die Siebvorrichtung zumindest ein Räumelement umfassen, das mit Hilfe eines Antriebs der Siebvorrichtung (z. B. einem Elektromotor) in regelmäßigen Abständen oder kontinuierlich entlang der Siebfläche bewegt wird.

Alternativ kann auch die Siebfläche beweglich ausgebildet sein, so dass sich Siebgut von dieser durch Bewegung der Siebfläche löst. Beispielsweise könnte die Siebfläche durch einen Siebzylinder gebildet werden, der teilweise in das Abwasser eintaucht, wobei Abwasser über eine Stirnseite in den Siebzylinder einströmt.

Während des Betriebs der Anordnung kommt es nun immer wieder vor, dass Siebgut in den Bereich der Siebvorrichtung gelangt, das aufgrund seiner Form, Größe, seines Gewichts oder auch seines Materials oder anderer Eigenschaften Beschädigungen der Siebvorrichtung oder eine Fehlfunktion derselben bewirken kann. Wird beispielsweise ein übermäßig großer Ast oder ein aus Kunststoff bestehender Rettungsring von einem Räumelement oder einer Austragseinrichtung (z. B. einer Förderschnecke) erfasst und in den Bereich eines Auslasses gefördert, so kann es dort zu einem Verklemmen des Siebguts kommen, so dass nachfolgend geliefertes Siebgut nicht mehr abtransportiert werden kann.

Um dies zu vermeiden, wird nun erfindungsgemäß vorgeschlagen, dass die Anordnung neben der Siebvorrichtung wenigstens einen Sensor umfasst. Der Sensor ist ausgebildet, das Siebgut im Bereich stromaufwärts der Siebfläche zu überwachen, also beispielsweise innerhalb eines Abschnitts eines Abwasserkanals, der sich in Fließrichtung des Abwassers gesehen vor der Siebvorrichtung befindet. Zusätzlich oder alternativ kann zumindest ein Sensor vorgesehen sein, der ausgebildet ist, das Siebgut im Bereich der Siebfläche zu überwachen, d. h. in einem Bereich, in dem das Siebgut bereits mit der Siebfläche in Kontakt gelangt ist.

Der Sensor ist vorzugsweise an einer Stelle platziert, die oberhalb des maximal zu erwartenden Abwasserspiegels liegt. Vorzugsweise ist der Sensor an einer Wandung eines Abwasserkanals oder an der Siebvorrichtung selbst befestigt.

Darüber hinaus ist vorgesehen, dass die Anordnung eine Steuerung umfasst, die ausgebildet ist, eine Meldung auszugeben, wenn das Siebgut eine oder mehrere definierte Eigenschaften aufweist, wobei die Eigenschaft(en) mit Hilfe des oder der Sensoren erkannt wird bzw. werden.

Als Eigenschaft des Siebguts werden eine oder mehrere der nachfolgenden Eigenschaften mit Hilfe des Sensors erkannt: Lage des Siebguts relativ zu dem mit dem Siebgut in Kontakt stehenden Räumelement, Größe, Form, Material, Höhe, Breite, Länge, Dichte oder Reflexionsverhalten des Siebguts, Anzahl der einzelnen auf die Siebvorrichtung zukommenden Siebgüter pro Zeiteinheit.

Zudem sei darauf hingewiesen, dass die jeweilige Eigenschaft nicht direkt vom Sensor erkannt werden muss. Vielmehr kann auch vorgesehen sein, dass der Sensor ein analoges oder digitales Signal an die Steuerung oder eine Rechnereinheit liefert, wobei die letztendliche Eigenschaft durch die Steuerung oder die Rechnereinheit aus dem Signal berechnet bzw. ermittelt wird.

Besondere Vorteile bringt es mit sich, wenn der Sensor als Kamera ausgebildet ist und die Anordnung eine Rechnereinheit umfasst, die ausgebildet ist, das von der Kamera gelieferte Signal, vorzugsweise mit Hilfe einer bildverarbeitenden Software, zu analysieren und hierdurch eine oder mehrere Eigenschaften des Siebguts zu ermitteln.

Bei der Kamera kann es sich um eine Kamera handeln, die sichtbares Licht, Infrarotlicht oder auch UV-Licht detektieren kann.

Ebenso kann es sich bei der Kamera um eine so genannte TOF-Kamera handeln. TOF-Kameras sind 3D-Kamerasysteme, die mit dem Laufzeitverfahren (englisch: time of flight, TOF, auch ToF) Distanzen messen. Sie werden nach dem verwendeten PMD-Sensor auch PMD-Kameras genannt (PMD-Sensor = Photomischsensor, auch PMD-Detektor genannt; PMD ist die Abkürzung für Photonic Mixing Device). Dazu wird die Szene mittels eines Lichtpulses ausgeleuchtet, und die Kamera misst für jeden Bildpunkt des Siebguts die Zeit, die das Licht bis zum Siebgut und wieder zurück braucht. Die benötigte Zeit ist direkt proportional zur Distanz. Die Kamera liefert somit für jeden Bildpunkt die Entfernung des darauf abgebildeten Abschnitts des Siebguts und somit im Ergebnis eine Oberflächenkontur des Siebguts und damit wiederum eine bestimmte Eigenschaft des Siebguts.

Selbstverständlich kann die Anordnung auch mehrere, eventuell auch verschiedenartig ausgebildete Sensoren aufweisen.

Auch muss die Steuerung nicht Teil der Siebvorrichtung sein. Vielmehr könnte diese an einer von der Siebvorrichtung entfernten Stelle platziert und, beispielsweise über eine Fernverbindung (z. B. über eine Cloud), mit der Siebvorrichtung lediglich in Wirkverbindung stehen.

In jedem Fall umfasst die Anordnung einen Sensor, mit dessen Hilfe eine oder mehrere Eigenschaften des Siebguts erkannt bzw. überwacht werden können. Die Steuerung erhält damit Informationen, mit deren Hilfe Aussagen darüber getroffen werden können, ob das in Kürze auf die Siebfläche treffende oder bereits mit dieser in Kontakt stehende Siebgut eine Gefahr für die Siebvorrichtung darstellt oder nicht. Diese Information kann beispielsweise an einen Betreiber der Anordnung weitergegeben werden.

Insbesondere handelt es sich bei der von der Steuerung ausgegebenen Meldung um ein optisches oder akustisches Signal (z. B. erzeugt durch eine Warnleuchte bzw. einen Lautsprecher). Auch ist es denkbar, dass die Meldung lediglich als analoges oder digitales Signal vorliegt, die von einer weiteren Einheit (z. B. einem Smartphone oder einer sonstigen Rechnereinheit) ausgewertet wird. Auch kann die Meldung als Text, Bild und/oder Film ausgegeben werden, die auf einem Display dargestellt werden, das wiederum Bestandteil der Anordnung oder eines externen Geräts (z. B. eines Smartphones oder eines Tablets) ist.

Der Sensor kann im Übrigen ausgebildet sein, sichtbares, IR- oder UV-Licht zu detektieren. Der Sensor kann also als Infrarot- oder UV-Sensor ausgebildet sein. Auch ist es denkbar, dass der Sensor als Ultraschallsensor oder Schallsensor, der Schall im hörbaren Bereich detektiert, ausgebildet ist. Ebenso ist es denkbar, dass der Sensor als Radarsensor (Radar = Radio Detection and Ranging; der Radarsensor funktioniert über das Aussenden einer elektromagnetischen Welle und dem Auswerten des Echos), als Lidarsensor oder als Lasersensor ausgebildet ist. Lidar steht für Light Detection and Ranging und bezeichnet die Verfahren, bei denen ein Lichtstrahl (z. B. mit 905nm Wellenlänge) ausgesendet wird und über die Laufzeit und Lichtgeschwindigkeit eine Entfernung berechnet werden kann. Ein Lasersensor, z. B. in Form eines Laserscanners, ist genau genommen auch ein Lidarsensor bzw. funktioniert nach dem Lidar Prinzip. Die Bezeichnung wird aber oft genutzt, um einen Sensor zu charakterisieren, welcher mit einer Diode und rotierenden Spiegeln arbeitet.

Ferner ist es von Vorteil, wenn die Anordnung einen Gassensor umfasst, der ausgebildet ist, ein oder mehrere Gase im Bereich der Siebvorrichtung zu detektieren. Mit Hilfe des Gassensors kann der Bereich der Siebvorrichtung somit kontinuierlich oder in vorgegebenen Abständen hinsichtlich des Vorhandenseins und/oder der Konzentration eines oder mehrerer Gase überwacht werden. Bei den vom Sensor detektierbaren Gasen kann es sich beispielsweise um explosive Gase, gasförmige CH₄-Verbindungen, z.B. Faulgase, oder flüchtige organische Verbindungen, wie beispielsweise Benzin, Diesel oder sonstige gasförmige Kraftstoffe handeln. Diese stellen eine Gefahr für den Betreiber der Anordnung dar und können beispielsweise frei werden, wenn ein befüllter Treibstoffkanister in den Bereich der Siebvorrichtung gelangt und dort beschädigt wird.

Denkbar wäre es, dass bei Erreichen eines Schwellenwertes, z. B. 20 % der unteren Explosionsgrenze, durch die Steuerung oder den Gassensor selbst ein Alarm ausgelöst wird. Gleichzeitig oder alternativ ist es auch denkbar, dass der oben beschriebene Sensor zur Überwachung des Siebguts oder sonstige Abschnitte der Anordnung, insbesondere die Siebvorrichtung, bei Erreichen des Schwellenwertes stillgesetzt wird.

Der Gassensor ist vorzugsweise an der Siebvorrichtung oder einem sonstigen starr angeordneten Abschnitt der Anordnung befestigt und damit vorzugsweise Bestandteil der erfindungsgemäßen Anordnung.

Neben der Detektion von ATEX-relevanten Gasen wäre es auch denkbar, dass der Gassensor ausgebildet ist, für den Menschen weitere, z. B. gefährliche oder schädliche, Gase zu detektieren, die innerhalb der Anordnung nach oben strömen. Beispielsweise kann der Gassensor ausgebildet sein, H₂S, CO, CO2 oder auch O₂ zu detektieren (ATEX ist ein Synonym für die ATEX-Richtlinien der Europäischen Union und leitet sich aus der französischen Abkürzung für ATmosphäres EXplosibles ab; die Direktive umfasst zwei Richtlinien auf dem Gebiet des Explosionsschutzes, nämlich die ATEX-Produktrichtlinie 2014/34/EU und die ATEX-Betriebsrichtlinie 1999/92/Einzugsgeschwindigkeit).

Auch ist es von Vorteil, wenn die Anordnung zumindest eine Lichtquelle aufweist, mit deren Hilfe das Siebgut stromaufwärts der Siebfläche (bezogen auf die Fließrichtung des die Siebfläche passierenden Abwassers) und/oder im Bereich der Siebfläche (d. h., in dem Bereich, in dem das Siebgut mit der Siebfläche in Kontakt steht) beleuchtet wird, wenn die Lichtquelle eingeschaltet ist. Bei der Lichtquelle kann es sich um eine Quelle handeln, die ausgebildet ist, im Betrieb sichtbares Licht, ultraviolettes Licht (UV-Licht) oder infrarotes Licht (IR-Licht) auszusenden. Die Lichtquelle kann Bestandteil des Sensors sein, insbesondere wenn dieser als Kamera ausgebildet ist. Auch ist es denkbar, dass es sich bei dem Sensor und der Lichtquelle um separate Einheiten handelt.

Zusätzlich oder alternativ kann der Sensor auch ausgebildet sein, Schallwellen, die von einer Schallquelle der Anordnung erzeugt und vom Siebgut reflektiert werden, zu detektieren. Die vom Sensor gelieferten Messwerte könnten dann wiederum mit Hilfe der Steuerung oder einer entsprechenden Rechnereinheit ausgewertet und hieraus eine oder mehrere Eigenschaften des entsprechenden Siebguts abgeleitet werden.

Vorzugsweise umfasst die Siebvorrichtung zumindest ein Räumelement, das mit Hilfe eines Antriebs der Siebvorrichtung entlang der Siebfläche bewegbar ist, um von der Siebfläche zurückgehaltenes Siebgut von dieser zu entfernen und in Richtung eines Auslasses der Siebvorrichtung zu fördern. Die Siebfläche ist in diesem Fall vorzugsweise durch eine Vielzahl von nebeneinander angeordneten Siebstäben gebildet. Diese können gerade oder auch gebogen ausgebildet sein.

Vorteilhaft ist es zudem, wenn die Steuerung ausgebildet ist, den genannten Antrieb, der die Bewegung des oder der Räumelemente bewirkt, zu stoppen, wenn das Siebgut eine oder mehrere definierte und mit Hilfe des wenigstens einen Sensors erkannte Eigenschaften aufweist. Beispielsweise wäre es denkbar, dass der Antrieb gestoppt oder gedrosselt (d. h. verlangsamt) wird, wenn ein auf die Siebfläche zutreibendes oder bereits von einem Räumelement erfasstes Siebgut eine räumliche Abmessung aufweist, die oberhalb eines Grenzwerts liegt. Eine Drosselung oder ein Stopp des Antriebs kann auch dann vorteilhaft sein, wenn sich das von einem Räumelement erfasste Siebgut in einem Bereich befindet, der außerhalb eines definierten räumlichen Bereichs auf dem Räumelement liegt. Der genannte Antrieb würde in diesem Fall gestoppt, um ein Verkanten oder Verklemmen dieses Siebguts innerhalb der Siebvorrichtung zu vermeiden.

Im Gegensatz zum Stand der Technik wird also nicht (nur) die Funktion bzw. eine mögliche Fehlfunktion der Siebvorrichtung detektiert. Vielmehr umfasst die Anordnung mit dem Sensor ein Element, das geeignet ist, Informationen über das auf die Siebvorrichtung zukommende oder sich bereits im Bereich der Siebfläche befindliche Siebgut zu sammeln, die geeignet sind, eine mögliche Fehlfunktion der Siebvorrichtung vorherzusagen. Die Anordnung kann damit präventiv eine entsprechende Fehlfunktion verhindern, indem eine Meldung ausgegeben wird oder der Antrieb des oder der Räumelemente (oder der Siebfläche, wenn diese beweglich ausgebildet ist) gestoppt wird, wenn ein Siebgut mit einer oder mehreren definierten Eigenschaften erkannt wird.

Alternativ wäre es auch denkbar, dass die Steuerung lediglich eine Meldung ausgibt, die dem Betreiber der Anordnung mitteilt, dass ein Siebgut auf die Siebfläche zukommt oder sich bereits in Kontakt mit dieser befindet, das eine oder mehrere ungewollte Eigenschaften aufweist. Die Meldung kann darüber hinaus die Information enthalten, dass die Bewegung des oder der Räumelemente gestoppt oder der Betrieb der Siebvorrichtung gestoppt oder deren Förderleistung gedrosselt werden sollte, um eine Beschädigung oder eine Fehlfunktion der Siebvorrichtung zu verhindern.

Vorteilhaft ist es, wenn die Siebvorrichtung einen Abstreifer aufweist. Der Abstreifer befindet sich vorzugsweise im oberen Bereich der Siebvorrichtung bzw. der Siebfläche und dient dazu, Siebgut im Bereich des Auslasses von dem oder den Räumelementen abzustreifen. Vorzugsweise ist der Abstreifer federbelastet und schmiegt sich beim Passieren eines Räumelements an dieses an. Durch die Relativbewegung zwischen Räumelement und Abstreifer kommt es zu einem Abstreifen des entsprechenden Siebguts. Das Siebgut verlässt die Siebvorrichtung schließlich über den Auslass. Vorzugsweise ist nun vorgesehen, dass der Abstreifer mit Hilfe einer Antriebsanordnung der Siebvorrichtung zwischen einer Abstreifstellung und einer Passierstellung bewegbar, vorzugsweise um eine Schwenkachse, verschwenkbar, ist. Während der Abstreifer in der Abstreifstellung eine Stellung einnimmt, in der er mit einem sich am Abstreifer vorbeibewegenden Räumelement in Kontakt kommt, ist der Abstreifer in der Passierstellung derart platziert, dass zwischen Abstreifer und sich an diesem vorbeibewegendem Räumelement ein minimaler Abstand von wenigstens 10 cm, vorzugsweise von wenigstens 20 cm, besteht.

Weist nun ein Siebgut, das den Sensor passiert, eine oder mehrere bestimmte Eigenschaften auf, die eine mechanische Beschädigung des Abstreifers oder des bzw. der Räumelemente oder eine Fehlfunktion des Abstreifers bewirken würde bzw. könnte, so wird der Abstreifer in seine Passierstellung verbracht. Das entsprechende Siebgut kann in diesem Fall den Abstreifer passieren und fällt schließlich durch Schwerkraft von dem das Siebgut fördernden Räumelement.

Darüber hinaus können die Signale des oder der Sensoren auch verwendet werden, um eine der Anordnung nachgeordnete Vorrichtung zu steuern oder deren Betrieb zu beeinflussen. Bei der Vorrichtung handelt es sich vorzugsweise um eine Vorrichtung, mit deren Hilfe das von der beschriebenen Siebvorrichtung aus dem Abwasser entfernte Siebgut weiter behandelt wird. Beispielsweise kann es sich bei der Vorrichtung um eine Trocknungsvorrichtung oder eine Presse handeln, die ausgebildet ist, den Wassergehalt des Siebguts durch einen Pressvorgang zu reduzieren.

Insbesondere ist vorgesehen, dass die Vorrichtung eine Maschinensteuerung aufweist, die mit der genannten Anordnung in Wirkverbindung steht, wobei die Maschinensteuerung ausgebildet ist, die Vorrichtung unter Berücksichtigung der von dem Sensor der genannten Anordnung gelieferten Signale zu steuern. Beispielsweise wäre es denkbar, dass der Betrieb der genannten Vorrichtung gestoppt wird, wenn auch die Siebvorrichtung gestoppt wird. Das Stoppen kann automatisch durch die Maschinensteuerung erfolgen. Auch kann die Förderleistung oder die Trocknungsleistung der Vorrichtung in Abhängigkeit der mit Hilfe des oder der Sensoren erkannten Eigenschaften des Siebguts geändert werden.

Gegenstand der Erfindung ist demnach auch ein System zur Behandlung von Abwasser, das eine Anordnung gemäß bisheriger und/oder nachfolgender Beschreibung sowie wenigstens eine der Anordnung nachgeschaltete Vorrichtung zur Behandlung des von der Anordnung zurückgehaltenen Siebguts umfasst.

Ferner umfasst die Erfindung ein Verfahren zum Betreiben einer Anordnung zum Abscheiden und Abtransport von Siebgut aus einem die Anordnung passierenden Abwasser. Bei der Anordnung handelt es sich vorzugsweise um eine Anordnung mit den bisher und/oder nachfolgend genannten Merkmalen, wobei die einzelnen Merkmale in beliebiger Kombination realisiert sein können.

Insbesondere umfasst die Anordnung eine Siebvorrichtung mit einer Siebfläche, die von dem Abwasser im Betrieb der Siebvorrichtung durchströmt wird und mit deren Hilfe im Abwasser mitgeführtes Siebgut zumindest teilweise zurückgehalten wird. Die Siebvorrichtung umfasst darüber hinaus vorzugsweise zumindest ein Räumelement, das zumindest zeitweise entlang der Siebfläche bewegt wird, um von der Siebfläche zurückgehaltenes Siebgut von dieser zu entfernen und in Richtung eines Auslasses der Siebvorrichtung zu fördern.

Schließlich ist vorgesehen, dass die Anordnung wenigstens einen Sensor umfasst, wobei das Siebgut mit Hilfe des Sensors im Bereich stromaufwärts der Siebfläche oder im Bereich der Siebfläche überwacht wird, wobei eine Meldung ausgegeben wird, wenn das Siebgut eine oder mehrere der folgenden und mit Hilfe des Sensors erkannten Eigenschaften aufweist: Lage des Siebguts relativ zu dem mit dem Siebgut in Kontakt stehenden Räumelement, Größe, Form, Material, Höhe, Breite, Länge, Dichte oder Reflexionsverhalten des Siebguts, Anzahl der einzelnen auf die Siebvorrichtung zukommenden Siebgüter pro Zeiteinheit. Hinsichtlich möglicher Sensoren bzw. die Art denkbarer Meldungen wird auf die obige Beschreibung verwiesen.

Das Verfahren zeichnet sich also dadurch aus, dass das Siebgut mit Hilfe zumindest eines Sensors überwacht wird, wobei hieraus Rückschlüsse auf eine oder mehrere Eigenschaften des überwachten Siebguts gezogen werden. Mögliche Eigenschaften, die überwacht werden können, sind im obigen Teil der Beschreibung genannt.

Mit Hilfe des Sensors kann also erkannt werden, ob sich ein Siebgut der Siebfläche nähert oder bereits von einem Räumelement erfasst ist, das eine oder mehrere Eigenschaften aufweist, die den weiteren Transport dieses Siebguts bis zum Auslass der Siebvorrichtung erschwert oder bei dessen Transport es zu mechanischen Beschädigungen oder zu einer Fehlfunktion der Siebvorrichtung kommen kann.

Durch die Ausgabe der Meldung erfährt der Betreiber der Anordnung bzw. deren Steuerung, dass eine Gefahr für die Siebvorrichtung besteht. Der Betreiber kann schließlich entsprechend handeln, z. B. das oder die Räumelemente anhalten und das entsprechende Siebgut manuell aus der Siebvorrichtung entfernen.

Vorteilhaft ist es zudem, wenn der Sensor als Kamera ausgebildet ist und das Signal der Kamera mit Hilfe einer bildverarbeitenden Software ausgewertet und hierdurch eine oder mehrere Eigenschaften des Siebguts bestimmt wird. Die Software kann Bestandteil der Steuerung sein. Denkbar ist auch, dass das Signal der Kamera an eine separate Rechnereinheit, z. B. einen tragbaren Computer, ein Tablet oder ein Smartphone, weitergeleitet und dort ausgewertet wird. Mit Hilfe der bildverarbeitenden Software können eine oder mehrere Eigenschaften, wie beispielsweise räumliche Abmessungen, die Form und Lage oder auch die Art des Siebguts, erkannt werden.

Besonders vorteilhaft ist es, wenn das Signal der Kamera an ein Display der Anordnung oder ein externes Display, beispielsweise eines Smartphones, zumindest zeitweise und in Form von einzelnen Bildern oder als Film (so genannter Stream) weitergegeben wird. Die Siebvorrichtung kann in diesem Fall auch von einer Stelle überwacht werden, an der die Siebvorrichtung nicht direkt einsehbar ist. Denkbar ist beispielsweise die Übertragung des Signals bzw. der davon abgeleiteten Eigenschaften des Siebguts an eine von der Siebvorrichtung entfernt angeordnete Leitstelle des Betreibers der Anordnung.

Ferner sei allgemein darauf hingewiesen, dass die Siebvorrichtung eine Siebfläche aufweisen kann, die durch einen um eine Drehachse angetriebenen Siebzylinder gebildet wird, wobei der Siebzylinder derart in das Abwasser eingetaucht ist, dass das Abwasser über eine Stirnseite des Siebzylinders in diesen einströmt. Die Entfernung des vom Siebzylinder zurückgehaltenen Siebguts erfolgt in diesem Fall beispielsweise mit Hilfe einer Förderschnecke.

Des Weiteren ist es vorteilhaft, wenn die Steuerung einem Betreiber der Anordnung einen Vorschlag unterbreitet, ob der Betrieb der Siebvorrichtung gestoppt oder deren Förderleistung gedrosselt bzw. ob das oder die Räumelemente gestoppt oder deren Bewegung gedrosselt werden soll, falls das Siebgut eine oder mehrere definierte Eigenschaften aufweist. Wenn eine oder mehrere Eigenschaften eines Siebguts erkannt wurden, die auf Probleme beim Betrieb der Siebvorrichtung, insbesondere beim Transport dieses Siebguts durch das oder die Räumelemente, schließen lässt, so kann die Meldung den Vorschlag an den Betreiber umfassen, dass der Antrieb des oder der Räumelemente gestoppt werden soll oder dass der Antrieb langsamer betrieben werden soll, um Beschädigungen der Siebvorrichtungen zu vermeiden. Zusätzlich oder alternativ kann die Meldung den Vorschlag enthalten, die Siebvorrichtung zu stoppen oder deren Förderleistung (d. h. die Menge an pro Zeiteinheit ausgetragenem Siebgut) zu drosseln.

Auch ist es von Vorteil, wenn die Steuerung bei der Abgabe des Vorschlags berücksichtigt, ob ein oder mehrere der zuvor an den Betreiber unterbreiteten Vorschläge vom Betreiber berücksichtigt wurden oder nicht. Wenn die Steuerung beispielsweise aus der Vergangenheit weiß, dass der Betreiber den Vorschlag zum Stoppen des oder der Räumelemente nicht in die Tat umgesetzt hat, wenn die Eigenschaft des Siebguts in einem bestimmten Bereich lag, so kann vorgesehen sein, dass dieser Vorschlag zukünftig nicht mehr unterbreitet wird. Die Steuerung kann also selbst lernend ausgebildet sein und die Vorschläge auf Basis des Verhaltens des Betreibers anpassen.

Generell ist es also von Vorteil, wenn die Steuerung bei der Auswertung des Signals des oder der Sensoren das Verhalten des Betreibers in der Vergangenheit berücksichtigt. Grenzwerte des Signals des oder der Sensoren, bei deren Erreichen bzw. Über- oder Unterschreiten eine Meldung ausgegeben und/oder der Antrieb des oder der Räumelemente gestoppt oder gedrosselt wird, können also während der Zeit verändert werden.

Besondere Vorteile bringt es mit sich, wenn bei der Entscheidung, ob eine Meldung ausgegeben wird oder nicht, externe Daten, wie beispielsweise Klima- oder Wetterdaten (z. B. Regenprognosen), soziale Ereignisse (z. B. Festivals in einem Gebiet, dessen Abwasser zur erfindungsgemäßen Anordnung geleitet wird) oder Kalenderdaten (z. B. die Jahreszeit), berücksichtigt werden. In Abhängigkeit dieser Daten können beispielsweise weitere Betreiber zu der Anordnung beordert werden, um mehr oder weniger häufig zu erwartende kritische Zustände der Anordnung schneller beheben zu können.

Vorteilhaft ist es zudem, wenn die Steuerung die Bewegung des oder der Räumelemente stoppt oder deren Bewegung verlangsamt, wenn das mit Hilfe des wenigstens einen Sensors überwachte Siebgut eine oder mehrere definierte Eigenschaften aufweist, wobei die Bewegung gestoppt wird, bevor oder nachdem das entsprechende Siebgut mit der Siebfläche in Kontakt gelangt. Zusätzlich oder alternativ kann auch der Betrieb der Siebvorrichtung gestoppt oder deren Förderleistung gedrosselt werden.

Auch ist es äußert vorteilhaft, wenn die von dem Sensor gelieferten Signale und/oder die mit Hilfe des Sensors erkannte(n) Eigenschaft(en) in einer Datenbank gespeichert und hinsichtlich vordefinierter Kennwerte ausgewertet werden. Beispielsweise wäre es denkbar, dass eine Statistik über das Vorhandensein bestimmter Eigenschaften des Siebguts bzw. deren zeitlicher Änderungen erstellt wird. Anomalien können hierdurch schnell erkannt und die Anordnung schnell angepasst werden, wobei hierzu beispielsweise die Änderung der Fördergeschwindigkeit des oder der Räumelemente zählen kann.

Schließlich ist es möglich, dass das Vorhandensein und/oder die Konzentration eines oder mehrerer Gase im Bereich der Siebvorrichtung mit Hilfe eines oben beschriebenen Gassensors überwacht bzw. detektiert wird.

Weitere Vorteile der Erfindung sind in den nachfolgenden Ausführungsbeispielen beschrieben. Es zeigen, jeweils schematisch:
- **Figur 1**: ein erfindungsgemäßes System umfassend eine erfindungsgemäße Anordnung zum Abscheiden und Abtransport von Siebgut aus Abwasser,
- **Figur 2a**: eine Draufsicht auf einen Ausschnitt einer erfindungsgemäßen Siebvorrichtung, und
- **Figur 2b**: eine Draufsicht auf einen Ausschnitt einer erfindungsgemäßen Siebvorrichtung mit veränderter Lage eines Siebguts.

Vorab sei erwähnt, dass in Figuren, die mehrere gleichartige Bauteile oder Abschnitte (wie beispielsweise Räumelemente 4) zeigen, teilweise nur eines oder zwei von mehreren gleichartigen Bauteilen bzw. Abschnitten mit Bezugszeichen versehen ist, um eine gute Übersichtlichkeit zu gewährleisten.

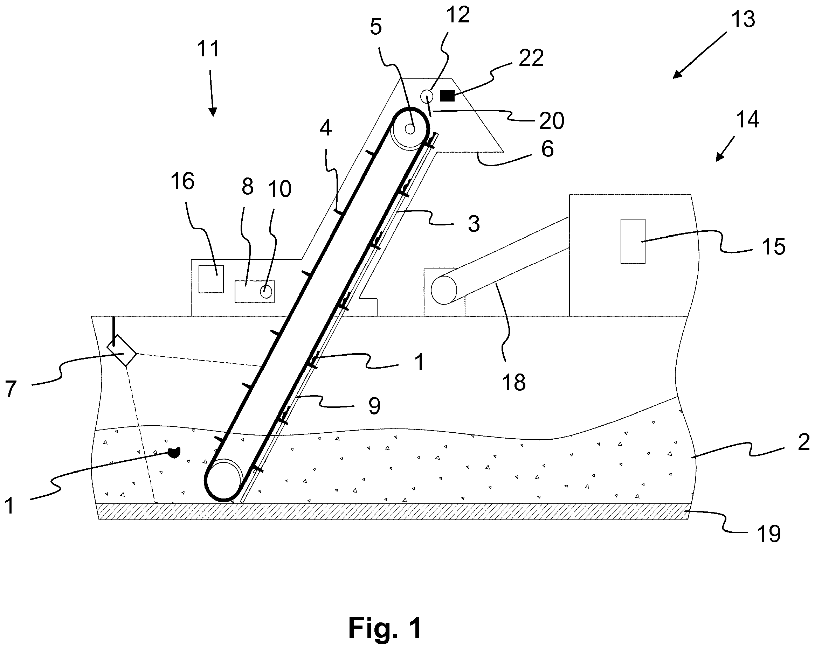

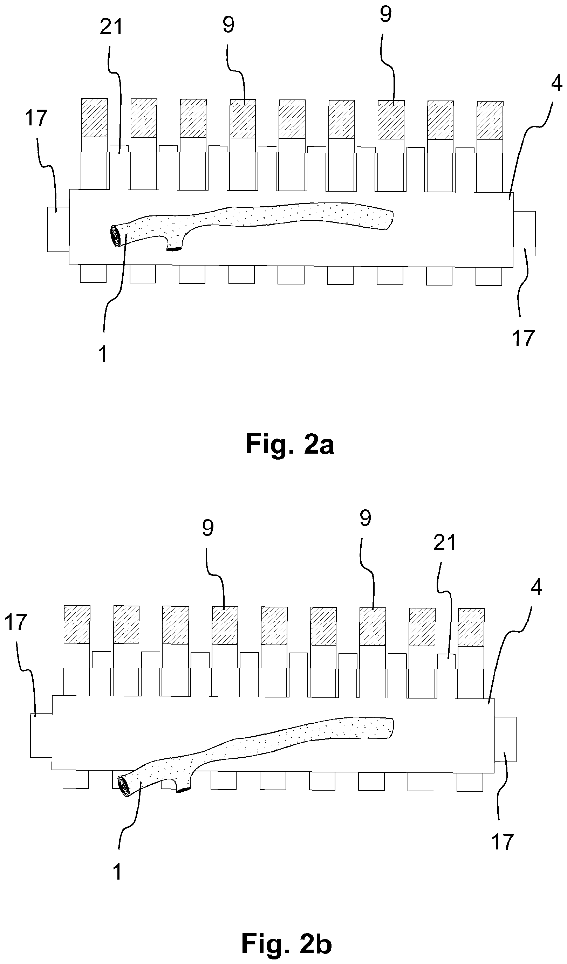

Figur 1 zeigt eine in einen Abwasserkanal 19 integrierte erfindungsgemäße Anordnung 11 zum Abscheiden und Entfernen von Siebgut 1 (z. B. in Form von Steinen, Ästen, etc.). Die Anordnung 11 umfasst eine Siebvorrichtung mit einer schräg von oben in das Abwasser 2 hineinragenden Siebfläche 3 in Form eines Siebrosts, der durch nicht gezeigte Befestigungselemente mit einem Gestell der Siebvorrichtung und bei Bedarf auch mit der Kanalsohle des Abwasserkanals 19 verbunden ist. Die Siebfläche 3 umfasst vorzugsweise mehrere nebeneinander angeordnete Siebstäbe 9 (vgl. Figuren 2a, 2b, die eine Draufsicht eines Ausschnitts einer entsprechenden Siebvorrichtung zeigen).

Ferner weist die Anordnung 11 zwei bezogen auf die Blattebene hintereinander angeordnete und voneinander beabstandete und mit Hilfe eines Antriebs 5 in Strömungsrichtung des Abwassers 2 vor der Siebfläche 3 umlaufend bewegbare Zugorgane 17 (z. B. in Form von Antriebsketten) auf, die über mehrere dazwischenliegende Räumelemente 4 miteinander in Verbindung stehen (unter Umständen kann auch nur ein Räumelement 4 ausreichend sein). Die Zugorgane 17 sind über nicht gezeigte seitliche Führungen in ihrer Bahn geführt, wobei die Führung im oberen und unteren Umlenkbereich, aber auch in den dazwischenliegenden Bereichen platziert sein kann, in denen die Zugorgane 17 parallel zueinander verlaufen.

Die Räumelemente 4 umfassen vorzugsweise eine Vielzahl von nebeneinander angeordneten Reinigungszinken 21, die in die Zwischenräume der Siebfläche 3 eingreifen, wenn das Räumelement 4 durch Antreiben der Zugorgane 17 in Förderrichtung (bezogen auf Figur 1 gegen den Uhrzeigersinn) an der stromaufwärts gerichteten Vorderseite der Siebfläche 3 vorbeistreicht (vergleiche auch Figuren 2a und 2b).

Das von der Siebfläche 3 zurückgehaltene Siebgut 1 (die Abwasserströmung verläuft in Figur 1 von links nach rechts) wird schließlich von den Räumelementen 4 bzw. deren Reinigungszinken 21 erfasst und nach oben gefördert. Vor dem Passieren des oberen Wendepunkts gelangt es schließlich, eventuell mit Hilfe des gezeigten aber nicht zwingend notwendigen Abstreifers 20, in den Bereich eines Auslasses 6 und von dort nach außen, beispielsweise in einen Container. Die Räumelemente 4 werden schließlich wieder zum unteren Wendepunkt geführt, so dass der Kreislauf von vorne beginnen kann. An dieser Stelle sei darauf hingewiesen, dass die Bewegungsbahn des bzw. der Räumelemente 4 nicht zwangsläufig vollständig vor der Siebfläche 3 (bezogen auf die Strömungsrichtung des Abwassers 2) verlaufen muss. Vielmehr ist auch eine nicht dargestellte Ausführung denkbar, in der das bzw. die Räumelemente 4 die Siebfläche 3 in der gezeigten Seitenansicht "umkreisen" (die Räumelemente 4 werden in diesem Fall mit Siebgut 1 vor und ohne Siebgut 1 hinter der Siebfläche 3 bewegt).

Wie Figur 1 darüber hinaus zeigt, kann der Siebvorrichtung bzw. der erfindungsgemäßen Anordnung 11, die neben der Siebvorrichtung auch wenigstens einen bereits oben erwähnten Sensor 7 umfasst, eine Vorrichtung 14 zur Behandlung des Siebguts 1 nachgeordnet sein. Diese Vorrichtung 14 kann beispielsweise als Presse oder Trocknungsanlage (Zentrifuge, Solartrockner, etc.) ausgebildet sein und dient der Verringerung des Wassergehalts des Siebguts 1, das die Siebvorrichtung verlässt. Beispielsweise kann das Siebgut 1 mittels Förderband 18 zur genannten Vorrichtung 14 transportiert werden, die gemeinsam mit der erfindungsgemäßen Anordnung 11 ein System 13 zur Behandlung von Abwasser 2 bilden.

Vorzugsweise weist die Vorrichtung 14 eine Maschinensteuerung 15 auf, die mit der Steuerung 8 der Siebvorrichtung bzw. der genannten Anordnung 11 bzw. einer Rechnereinheit 10 derselben in Verbindung steht.

Erfindungsgemäß ist nun vorgesehen, dass die Anordnung 11 einen oder mehrere Sensoren 7 umfasst, mit dessen bzw. deren Hilfe eine oder mehrere Eigenschaften des auf die Siebfläche 3 im Abwasser 2 zuströmenden Siebguts 1 bzw. des Siebguts 1, das sich bereits im Wirkbereich eines Räumelements 4 befindet, erkannt werden kann.

Hinsichtlich der möglichen Eigenschaften bzw. möglicher Merkmale des Sensors 7 wird auf die allgemeine Beschreibung verwiesen.

Generell ist es denkbar, dass der Sensor 7 an der Siebvorrichtung oder auch, wie in Figur 1 gezeigt, an einer Wandung des Abwasserkanals 19, in den die Siebvorrichtung integriert ist, befindet. In Figur 1 ist der Sensor 7 als Kamera ausgebildet, wobei das Blickfeld der Kamera durch die beiden gestrichelten Linien dargestellt ist.

Der Sensor 7 steht wiederum mit einer Steuerung 8 der Anordnung 11 bzw. einer Rechnereinheit 10 derselben in Wirkverbindung. Ferner kann die Anordnung 11 ein Display 16 umfassen, auf dem eine Meldung angezeigt werden kann, wenn die überwachte(n) Eigenschaft(en) des Siebguts 1 bestimmte Kriterien erfüllen. Das Display 16 kann auch Bestandteil eines Remote-Geräts, z. B. eines Smartphones, sein.

Ebenso wäre es denkbar, dass der Abstreifer 20 mit Hilfe einer Antriebsanordnung 12 in eine Passierstellung bewegt wird, wenn das Siebgut 1 bestimmte Eigenschaften aufweist, um eine ungewollte Kollision dieses Siebguts 1 mit dem Abstreifer 20 zu verhindern.

Schließlich zeigt Figur 1, dass im Bereich der Siebvorrichtung ein Gassensor 22 vorhanden sein kann, der ausgebildet ist, ein oder mehrere Gase zu detektieren und/oder deren Konzentration zu messen. Hinsichtlich weiterer möglicher Merkmale des Gassensors 22 wird auf die obige Beschreibung verwiesen.

Figur 2a zeigt nun eine Draufsicht eines Ausschnitts einer erfindungsgemä-ßen Anordnung 11. Wie dieser Figur zu entnehmen ist, wurde von der Siebfläche 3, die durch die Vielzahl an Siebstäben 9 gebildet wird, ein Siebgut 1 in Form eines Astes zurückgehalten, der nun von einem Räumelement 4 erfasst wurde.

Würde nun dieser Ast nach oben und letztendlich zum Auslass 6 befördert, so sind keine Probleme zu erwarten.

Anders stellt sich die Situation im Fall der Figur 2b dar. Hier liegt ein Teil des Astes außerhalb des Räumelements 4, so dass die Gefahr besteht, dass sich der Ast bei der Weiterbewegung des Räumelements 4 zwischen dem Räumelement 4 und einer Wandung oder sonstigem Abschnitt der Siebvorrichtung verklemmt. Die in diesem Fall überwachte Eigenschaft könnte daher die Lage des Siebguts 1 bezüglich des Räumelements 4 sein.

Wird nun erkannt, dass die Lage nicht den Vorgaben für einen problemlosen Betrieb der Anordnung 11 entspricht, so wird eine Meldung ausgegeben und gegebenenfalls der Antrieb 5 gestoppt.

Ferner ist es denkbar, dass auch die nachgeschaltete Vorrichtung 14 gestoppt oder deren Förderleistung gedrosselt wird.

Im Ergebnis sieht die Erfindung also vor, dass definierte Eigenschaften des Siebguts 1 überwacht und auf Basis dieser Eigenschaften Meldungen ausgegeben bzw. das Betriebsverhalten der beschriebenen Anordnung 11 oder der genannten Vorrichtung 14 angepasst wird, um Fehlfunktionen und Beschädigungen zu vermeiden.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Siebgut
- 2: Abwasser
- 3: Siebfläche
- 4: Räumelement
- 5: Antrieb
- 6: Auslass
- 7: Sensor
- 8: Steuerung
- 9: Siebstab
- 10: Rechnereinheit
- 11: Anordnung zum Abscheiden und Abtransport von Siebgut
- 12: Antriebsanordnung
- 13: System zur Entfernung von Verunreinigungen aus Abwasser
- 14: Vorrichtung zur Behandlung von Siebgut
- 15: Maschinensteuerung
- 16: Display
- 17: Zugorgan
- 18: Förderband
- 19: Abwasserkanal
- 20: Abstreifer
- 21: Reinigungszinken
- 22: Gassensor

## Patentansprüche

1. Anordnung (11) zum Abscheiden und Abtransport von Siebgut (1) aus einem die Anordnung (11) passierenden Abwasser (2), wobei die Anordnung (11) eine Siebvorrichtung mit einer Siebfläche (3) umfasst, die von dem Abwasser (2) im Betrieb der Siebvorrichtung durchströmt wird und mit deren Hilfe im Abwasser (2) mitgeführtes Siebgut (1) zumindest teilweise zurückgehalten wird,
**dadurch gekennzeichnet, dass** die Anordnung (11) wenigstens einen Sensor (7) umfasst, der ausgebildet ist, das Siebgut (1) im Bereich stromaufwärts der Siebfläche (3) und/oder im Bereich der Siebfläche (3) zu überwachen, und dass die Anordnung (11) eine Steuerung (8) umfasst, die ausgebildet ist, eine Meldung auszugeben, wenn das Siebgut (1) eine oder mehrere der folgenden und mit Hilfe des Sensors (7) erkannten Eigenschaften aufweist: Lage des Siebguts relativ zu einem mit dem Siebgut in Kontakt stehenden Räumelement (4) der Anordnung, Größe, Form, Material, Höhe, Breite, Länge, Dichte oder Reflexionsverhalten des Siebguts, Anzahl der einzelnen auf die Siebvorrichtung zukommenden Siebgüter pro Zeiteinheit.

2. Anordnung (11) gemäß dem vorangegangenen Anspruch, **dadurch gekennzeichnet, dass** der Sensor (7) als Kamera, beispielsweise als TOF-Kamera, ausgebildet ist und die Anordnung (11) eine Rechnereinheit (10) umfasst, die ausgebildet ist, das von der Kamera gelieferte Signal, vorzugsweise mit Hilfe einer bildverarbeitenden Software, zu analysieren und hierdurch eine oder mehrere Eigenschaften des Siebguts (1) zu ermitteln, oder dass der Sensor (7) als Radarsensor, als Infrarotsensor, als Lidarsensor, als Ultraschallsensor oder als Lasersensor ausgebildet ist.

3. Anordnung (11) gemäß einem der vorangegangenen Ansprüche, **dadurch gekennzeichnet, dass** die Anordnung (11) einen Gassensor (22) umfasst, der ausgebildet ist, ein oder mehrere Gase im Bereich der Siebvorrichtung zu detektieren, wobei der Gassensor (22) vorzugsweise mit der Steuerung (8) in Wirkverbindung steht.

4. Anordnung (11) gemäß einem der vorangegangenen Ansprüche, **dadurch gekennzeichnet, dass** die Anordnung (11) zumindest eine Lichtquelle aufweist, mit deren Hilfe das Siebgut (1) stromaufwärts der Siebfläche (3) und/oder im Bereich der Siebfläche (3) beleuchtet wird, wenn die Lichtquelle eingeschaltet ist.

5. Anordnung (11) gemäß einem der vorangegangenen Ansprüche, **dadurch gekennzeichnet, dass** die Siebvorrichtung zumindest das Räumelement (4) aufweist, das mit Hilfe eines Antriebs (5) der Siebvorrichtung entlang der Siebfläche (3) bewegbar ist, um von der Siebfläche (3) zurückgehaltenes Siebgut (1) von dieser zu entfernen und in Richtung eines Auslasses (6) der Siebvorrichtung zu fördern, wobei die Steuerung (8) vorzugsweise ausgebildet ist, den genannten Antrieb (5) zu stoppen oder zu drosseln, wenn das Siebgut (1) eine oder mehrere definierte und mit Hilfe des wenigstens einen Sensors (7) erkannte Eigenschaften aufweist.

6. Anordnung (11) gemäß Anspruch 5, **dadurch gekennzeichnet, dass** die Siebvorrichtung einen Abstreifer (20) aufweist, mit dessen Hilfe Siebgut (1) im Bereich des Auslasses (6) von dem oder den Räumelementen (4) abgestreift wird, wenn das oder die Räumelemente (4) bewegt werden, wobei der Abstreifer (20) mit Hilfe einer Antriebsanordnung (12) der Siebvorrichtung zwischen einer Abstreifstellung und einer Passierstellung bewegbar, vorzugsweise verschwenkbar, ist.

7. System (13) zur Behandlung von Abwasser (2), umfassend eine Anordnung (11) gemäß einem der vorangegangenen Ansprüche sowie wenigstens eine der Anordnung (11) nachgeschaltete Vorrichtung (14) zur Behandlung des von der Anordnung (11) zurückgehaltenen Siebguts (1), wobei die Vorrichtung (14) eine Maschinensteuerung (15) aufweist, die mit der genannten Anordnung (11) in Wirkverbindung steht, wobei die Maschinensteuerung (15) ausgebildet ist, die Vorrichtung (14) unter Berücksichtigung der von dem Sensor (7) der genannten Anordnung (11) gelieferten Signale zu steuern.

8. Verfahren zum Betreiben einer Anordnung (11) zum Abscheiden und Abtransport von Siebgut (1) aus einem die Anordnung (11) passierenden Abwasser (2), vorzugsweise zum Betreiben einer Anordnung (11) gemäß einem oder mehreren der vorangegangenen Ansprüche 1 bis 6, wobei die Anordnung (11) eine Siebvorrichtung mit einer Siebfläche (3) umfasst, die von dem Abwasser (2) im Betrieb der Siebvorrichtung durchströmt wird und mit deren Hilfe im Abwasser (2) mitgeführtes Siebgut (1) zumindest teilweise zurückgehalten wird,
**dadurch gekennzeichnet, dass** die Anordnung (11) wenigstens einen Sensor (7) umfasst, wobei das Siebgut (1) mit Hilfe des Sensors (7) im Bereich stromaufwärts der Siebfläche (3) und/oder im Bereich der Siebfläche (3) überwacht wird, und dass eine Meldung ausgegeben wird, wenn das Siebgut (1) eine oder mehrere der folgenden und mit Hilfe des Sensors (7) erkannten Eigenschaften aufweist: Lage des Siebguts relativ zu einem mit dem Siebgut in Kontakt stehenden Räumelement (4) der Anordnung, Größe, Form, Material, Höhe, Breite, Länge, Dichte oder Reflexionsverhalten des Siebguts, Anzahl der einzelnen auf die Siebvorrichtung zukommenden Siebgüter pro Zeiteinheit.

9. Verfahren gemäß dem vorangegangenen Anspruch, **dadurch gekennzeichnet, dass** der Sensor (7) als Kamera, z. B. als TOF-Kamera, ausgebildet ist und das Signal der Kamera mit Hilfe einer bildverarbeitenden Software ausgewertet und hierdurch eine oder mehrere Eigenschaften des Siebguts (1) bestimmt wird, wobei das Signal der Kamera vorzugsweise an ein Display (16) der Anordnung (11) oder ein externes Display (16), beispielsweise eines Smartphones, zumindest zeitweise und in Form von einzelnen Bildern oder als Film weitergegeben wird.

10. Verfahren gemäß Anspruch 8 oder 9, **dadurch gekennzeichnet, dass** die Siebvorrichtung zumindest das Räumelement (4) aufweist, das zumindest zeitweise entlang der Siebfläche (3) bewegt wird, um von der Siebfläche (3) zurückgehaltenes Siebgut (1) von dieser zu entfernen und in Richtung eines Auslasses (6) der Siebvorrichtung zu fördern.

11. Verfahren gemäß einem der Ansprüche 8 bis 10, **dadurch gekennzeichnet, dass** die Steuerung (8) einem Betreiber der Anordnung (11) einen Vorschlag unterbreitet, ob der Betrieb der Siebvorrichtung gestoppt oder deren Förderleistung gedrosselt und/oder die Bewegung des oder der Räumelemente (4) gestoppt oder verlangsamt werden soll, falls das Siebgut (1) eine oder mehrere definierte Eigenschaften aufweist.

12. Verfahren gemäß Anspruch 11, **dadurch gekennzeichnet, dass** die Steuerung (8) bei der Abgabe des Vorschlags berücksichtigt, ob ein oder mehrere der zuvor an den Betreiber unterbreiteten Vorschläge vom Betreiber berücksichtigt wurden oder nicht.

13. Verfahren gemäß einem der Ansprüche 8 bis 12, **dadurch gekennzeichnet, dass** bei der Entscheidung, ob eine Meldung ausgegeben wird oder nicht, externe Daten, wie beispielsweise Klima- oder Wetterdaten, soziale Ereignisse oder Kalenderdaten, berücksichtigt werden.

14. Verfahren gemäß einem der Ansprüche 8 bis 13, **dadurch gekennzeichnet, dass** die Steuerung (8) die Bewegung des oder der Räumelemente (4) stoppt oder verlangsamt und/oder den Betrieb der Siebvorrichtung stoppt oder deren Förderleistung drosselt, wenn das mit Hilfe des wenigstens einen Sensors (7) überwachte Siebgut (1) eine oder mehrere definierte Eigenschaften aufweist.

15. Verfahren gemäß einem der Ansprüche 8 bis 14, **dadurch gekennzeichnet, dass** die von dem Sensor (7) gelieferten Signale und/oder die mit Hilfe des Sensors (7) erkannte(n) Eigenschaft(en) in einer Datenbank gespeichert und hinsichtlich vordefinierter Kennwerte ausgewertet werden.

## Claims

1. An arrangement (11) for separating out and removing screenings (1) from wastewater (2) passing through the arrangement (11), wherein the arrangement (11) comprises a screening device including a screen surface (3), through which the wastewater (2) flows during operation of the screening device and with the aid of which screenings (1) carried along in the wastewater (2) are at least partially retained,
**characterized in that** the arrangement (11) comprises at least one sensor (7) which is designed for monitoring the screenings (1) in the area upstream from the screen surface (3) and/or in the area of the screen surface (3), and **in that** the arrangement (11) comprises a controller (8) which is designed for outputting a message when the screenings (1) have one or several of the following properties and are recognized with the aid of the sensor (7):
position of the screenings relative to a clearing element (4) of the arrangement being in contact with the screenings, size, shape, material, height, width, length, density or reflectivity of the screenings, number of individual screenings approaching the screening device per unit of time.

2. The arrangement (11) as claimed in the preceding claim, **characterized in that** the sensor (7) is designed as a camera, for example, as a TOF camera, and the arrangement (11) comprises a processing unit (10) which is designed for analyzing the signal delivered by the camera, preferably with the aid of image-processing software, and, in this way, ascertaining one or several properties of the screenings (1), or **in that** the sensor (7) is designed as a radar sensor, as an infrared sensor, as a LIDAR sensor, as an ultrasonic sensor, or as a laser sensor.

3. The arrangement (11) as claimed in one of the preceding claims, **characterized in that** the arrangement (11) comprises a gas sensor (22) which is designed for detecting one or more gases in the area of the screening device, wherein the gas sensor (22) is preferably in operative connection with the control (8).

4. The arrangement (11) as claimed in one of the preceding claims, **characterized in that** the arrangement (11) comprises at least one light source, with the aid of which the screenings (1) upstream from the screen surface (3) and/or in the area of the screen surface (3) are illuminated when the light source is switched on.

5. The arrangement (11) as claimed in one of the preceding claims, **characterized in that** the screening device comprises at least the clearing element (4) which can be moved along the screen surface (3) with the aid of a drive (5) of the screening device in order to remove screenings (1) retained by the screen surface (3) from the screen surface (3) and convey the screenings (1) in the direction of an outlet (6) of the screening device, wherein the controller (8) is especially designed for stopping or throttling the aforementioned drive (5) when the screenings (1) have one or several properties which have been defined and have been recognized with the aid of the at least one sensor (7).

6. The arrangement (11) as claimed in claim 5, **characterized in that** the screening device comprises a scraper (20), with the aid of which screenings (1) in the area of the outlet (6) are scraped off the clearing element(s) (4) when the clearing element(s) (4) is/are moved, wherein the scraper (20) is movable, preferably pivotable, between a scraping position and a passage position with the aid of a drive arrangement (12) of the screening device.

7. A system (13) for treating wastewater (2), comprising an arrangement (11) as claimed in one of the preceding claims as well as at least one device (14), which is installed downstream from the arrangement (11), for treating the screenings (1) retained by the arrangement (11), wherein the device (14) comprises a machine controller (15) which is operatively connected to the aforementioned arrangement (11), wherein the machine controller (15) is designed for controlling the device (14) with consideration for the signals delivered by the sensor (7) of the aforementioned arrangement (11).

8. A method for operating an arrangement (11) for separating out and removing screenings (1) from wastewater (2) passing through the arrangement (11), preferably for operating an arrangement (11) as claimed in one or more of the preceding claims 1 to 6, wherein the arrangement (11) comprises a screening device including a screen surface (3), through which the wastewater (2) flows during operation of the screening device and with the aid of which screenings (1) carried along in the wastewater (2) are at least partially retained,
**characterized in that** the arrangement (11) comprises at least one sensor (7), wherein the screenings (1) are monitored with the aid of the sensor (7) in the area upstream from the screen surface (3) or in the area of the screen surface (3), and a message is output when the screenings (1) have one or several of the following properties and are recognized with the aid of the sensor (7):
position of the screenings relative to a clearing element (4) of the arrangement in contact with the screenings, size, shape, material, height, width, length, density or reflectivity of the screenings, number of individual screenings approaching the screening device per unit of time.

9. The method as claimed in the preceding claim, **characterized in that** the sensor (7) is designed as a camera, for example, as a TOF camera, and the signal from the camera is evaluated with the aid of image-processing software and, in this way, one or several properties of the screenings (1) is/are determined, wherein the signal from the camera is forwarded to a display (16) of the arrangement (11) or to an external display (16), for example, of a smartphone, at least intermittently and in the form of individual images or as film.

10. The method as claimed in one of claims 8 to 9, **characterized in that** the screening device comprises at least the clearing element (4) which is moved along the screen surface (3), at least intermittently, in order to remove screenings (1) retained by the screen surface (3) from the screen surface (3) and convey the screenings (1) in the direction of an outlet (6) of the screening device.

11. The method as claimed in one of claims 8 to 10, **characterized in that** the controller (8) presents a proposal to an operator of the arrangement (11) regarding whether to stop the operation of the screening device or to throttle the delivery rate thereof, and/or whether the movement of the clearing element(s) (4) is to be stopped or slowed down if the screenings (1) have one or several defined properties.

12. The method as claimed in claim 11, **characterized in that** the controller (8) takes into account, during the presentation of the proposal, whether one or several of the proposals previously presented to the operator has/have been taken into account by the operator, or not.

13. The method as claimed in one of claims 8 to 12, **characterized in that** external data such as climate or weather data, social events, or calendar data are taken into account in the decision whether to output a message, or not.

14. The method as claimed in one of claims 8 to 13, **characterized in that** the controller (8) stops or slows down the movement of the clearing element(s) (4) and/or stops the operation of the screening device or throttles the delivery rate thereof when the screenings (1) monitored with the aid of the at least one sensor (7) have one or several defined properties.

15. The method as claimed in one of claims 8 to 14, **characterized in that** the signals delivered by the sensor (7) and/or the property or properties recognized with the aid of the sensor (7) are stored in a database and are evaluated with respect to predefined characteristic values.

## Revendications

1. Agencement (11) pour séparer et évacuer du refus de dégrillage (1) à partir d'une eau usée (2) traversant l'agencement (11), l'agencement (11) comprenant un dispositif de dégrillage avec une surface de dégrillage (3) qui est traversée par l'eau usée (2) pendant le fonctionnement du dispositif de dégrillage et à l'aide de laquelle du refus de dégrillage (1) entraîné dans l'eau usée (2) est retenu au moins partiellement, **caractérisé en ce que** l'agencement (11) comprend au moins un capteur (7) qui est conçu pour surveiller le refus de dégrillage (1) dans la zone en amont de la surface de dégrillage (3) et/ou dans la zone de la surface de dégrillage (3), et **en ce que** l'agencement (11) comprend une commande (8) qui est conçue pour émettre un message lorsque le refus de dégrillage (1) présente une ou plusieurs des propriétés suivantes et détectées à l'aide du capteur (7) : position du refus de dégrillage par rapport à un élément de dégagement (4) de l'agencement en contact avec le refus de dégrillage, taille, forme, matière, hauteur, largeur, longueur, densité ou comportement de réflexion du refus de dégrillage, nombre de refus de dégrillage individuels arrivant au dispositif de dégrillage par unité de temps.

2. Agencement (11) selon la revendication précédente, **caractérisé en ce que** le capteur (7) est réalisé sous la forme d'une caméra, par exemple d'une caméra TOF, et l'agencement (11) comprend une unité de calcul (10) qui est conçue pour analyser le signal fourni par la caméra, de préférence à l'aide d'un logiciel de traitement d'image, et pour, ainsi, déterminer une ou plusieurs propriétés du refus de dégrillage (1), ou **en ce que** le capteur (7) est conçu comme un capteur radar, un capteur infrarouge, un capteur lidar, un capteur à ultrasons ou un capteur laser.

3. Agencement (11) selon l'une quelconque des revendications précédentes, **caractérisé en ce que** l'agencement (11) comprend un capteur de gaz (22) qui est conçu pour détecter un ou plusieurs gaz dans la zone du dispositif de dégrillage, le capteur de gaz (22) étant de préférence en liaison fonctionnelle avec la commande (8).

4. Agencement (11) selon l'une quelconque des revendications précédentes, **caractérisé en ce que** l'agencement (11) comporte au moins une source lumineuse à l'aide de laquelle le refus de dégrillage (1) est éclairé en amont de la surface de dégrillage (3) et/ou dans la zone de la surface de dégrillage (3) lorsque la source lumineuse est allumée.

5. Agencement (11) selon l'une quelconque des revendications précédentes, **caractérisé en ce que** le dispositif de dégrillage comprend au moins l'élément de dégagement (4) qui est déplaçable le long de la surface de dégrillage (3) à l'aide d'un entraînement (5) du dispositif de dégrillage pour éliminer de la surface de dégrillage (3) le refus de dégrillage (1) retenus par celle-ci et l'acheminer en direction d'une sortie (6) du dispositif de dégrillage, la commande (8) étant de préférence conçue pour arrêter ou restreindre ledit entraînement (5) lorsque le refus de dégrillage (1) présente une ou plusieurs propriétés définies et détectées à l'aide de l'au moins un capteur (7).

6. Agencement (11) selon la revendication 5, **caractérisé en ce que** le dispositif de dégrillage présente un racleur (20) à l'aide duquel le refus de dégrillage (1) est raclé du ou des éléments de dégagement (4) dans la zone de la sortie (6) lorsque le ou les éléments de dégagement (4) sont déplacés, le racleur (20) pouvant être déplacé, de préférence pivoté, entre une position de raclage et une position de passage à l'aide d'un agencement d'entraînement (12) du dispositif de dégrillage.

7. Système (13) pour traiter une eau usée (2), comprenant un agencement (11) selon l'une quelconque des revendications précédentes ainsi qu'au moins un dispositif (14) situé en aval de l'agencement (11) pour le traitement d'un refus de dégrillage (1) retenu par l'agencement (11), le dispositif (14) présentant une commande de machine (15) qui est en liaison fonctionnelle avec ledit agencement (11), la commande de machine (15) étant conçue pour commander le dispositif (14) en tenant compte des signaux fournis par le capteur (7) dudit agencement (11).

8. Procédé pour faire fonctionner un agencement (11) pour séparer et évacuer du refus de dégrillage (1) à partir d'une eau usée (2) traversant l'agencement (11), de préférence pour faire fonctionner un agencement (11) selon l'une quelconque ou plusieurs des revendications 1 à 6 précédentes, l'agencement (11) comprenant un dispositif de dégrillage avec une surface de dégrillage (3) qui est traversée par l'eau usée (2) pendant le fonctionnement du dispositif de dégrillage et à l'aide de laquelle du refus de dégrillage (1) entraîné dans l'eau usée (2) est retenu au moins partiellement,
**caractérisé en ce que** l'agencement (11) comprend au moins un capteur (7), le refus de dégrillage (1) étant surveillé à l'aide du capteur (7) dans la zone en amont de la surface de dégrillage (3) et/ou dans la zone de la surface de dégrillage (3), et **en ce qu'**un message est émis lorsque le refus de dégrillage (1) présente une ou plusieurs des propriétés suivantes et détectées à l'aide du capteur (7) : position du refus de dégrillage par rapport à un élément de dégagement (4) de l'agencement en contact avec le refus de dégrillage, taille, forme, matière, hauteur, largeur, longueur, densité ou comportement de réflexion du refus de dégrillage, nombre de refus de dégrillage individuels arrivant au dispositif de dégrillage par unité de temps.

9. Procédé selon la revendication précédente, **caractérisé en ce que** le capteur (7) est réalisé sous la forme d'une caméra, par exemple d'une caméra TOF, et le signal de la caméra est exploité à l'aide d'un logiciel de traitement d'images et, de ce fait, une ou plusieurs propriétés du refus de dégrillage (1) sont déterminées, le signal de la caméra étant de préférence transmis à un écran (16) de l'agencement (11) ou à un écran externe (16), par exemple d'un téléphone intelligent, au moins périodiquement et sous la forme d'images individuelles ou d'un film.

10. Procédé selon la revendication 8 ou 9, **caractérisé en ce que** le dispositif de dégrillage comprend au moins l'élément de dégagement (4) qui est déplaçable au moins périodiquement le long de la surface de dégrillage (3) pour éliminer de la surface de dégrillage (3) le refus de dégrillage (1) retenus par celle-ci et l'acheminer en direction d'une sortie (6) du dispositif de dégrillage.

11. Procédé selon l'une quelconque des revendications 8 à 10, **caractérisé en ce que** la commande (8) soumet à un exploitant de l'agencement (11) une proposition portant sur l'arrêt ou non du fonctionnement du dispositif de dégrillage ou la réduction de son débit et/ou l'arrêt ou le ralentissement du mouvement du ou des éléments de dégagement (4), dans le cas où le refus de dégrillage (1) présente une ou plusieurs propriétés définies.

12. Procédé selon la revendication 11, **caractérisé en ce que** la commande (8) prend en compte, lors de l'émission de la proposition, le fait qu'une ou plusieurs des propositions précédemment soumises à l'exploitant ont été prises en compte ou non par l'exploitant.

13. Procédé selon l'une quelconque des revendications 8 à 12, **caractérisé en ce que** des données externes, telles que des données climatiques ou météorologiques, des évènements sociaux ou des données calendaires, sont prises en compte lors de la décision d'émettre ou non un message.

14. Procédé selon l'une quelconque des revendications 8 à 13, **caractérisé en ce que** la commande (8) arrête ou ralentit le mouvement du ou des éléments de dégagement (4) et/ou arrête le fonctionnement du dispositif de dégrillage ou réduit son débit dans le cas où le refus de dégrillage (1) surveillé à l'aide de l'au moins un capteur (7) présente une ou plusieurs propriétés définies.

15. Procédé selon l'une quelconque des revendications 8 à 14, **caractérisé en ce que** les signaux fournis par le capteur (7) et/ou la ou les propriétés détectées à l'aide du capteur (7) sont enregistrés dans une base de données et évalués en termes de valeurs caractéristiques prédéfinies.
